# EUROPÄISCHE PATENTSCHRIFT

(11) **EP 1 235 642 B1**
(45) Veröffentlichungstag und Bekanntmachung des Hinweises auf die Patenterteilung: **14.07.2004**
(21) Anmeldenummer: 00967816.0
(22) Anmeldetag: 28.09.2000
(51) Int. Cl.: B01J 12/00, H01M 8/06, C01B 3/38

(54) **AUTOTHERMER REFORMIERUNGSREAKTOR**
AUTOTHERMIC REFORMING REACTOR
REACTEUR DE REFORMAGE AUTOTHERMIQUE

(30) Priorität: 02.10.1999 DE 19947755
(43) Veröffentlichungstag der Anmeldung: 04.09.2002
(73) Patentinhaber: DaimlerChrysler AG, 70567 Stuttgart (DE)
(72) Erfinder: DOCTER, Andreas, 73728 Esslingen (DE); RÖLTGEN, Uli, 79379 Müllheim (DE); WIESHEU, Norbert, 89312 Günzburg (DE)
(86) Internationale Anmeldenummer: PCT/EP2000/009477
(87) Internationale Veröffentlichungsnummer: WO 2001/024922

(56) Entgegenhaltungen:
- EP-A- 0 967 005
- US-A- 4 203 906
- US-A- 4 822 521

## Beschreibung

Die Erfindung betrifft einen autothermen Reformierungsreaktor nach dem Oberbegriff des Patentanspruchs 1.

Beim Betrieb von Brennstoffzellen mit Polymermembranen, kurz PEM-Brennstoffzellen genannt, insbesondere für mobile Anwendungen, kann ein wasserstoffreiches Gas aus einem flüssigen Rohkraftstoff durch Reformierung von flüssigen Kohlenwasserstoffen, z.B. Benzin oder Diesel erzeugt werden.

Diese Reaktion kann vorteilhaft in einem autothermen Reaktor durchgeführt werden. Darin wird durch eine exotherme Verbrennung Energie freigesetzt, die zur Beheizung der endothermen Reformierungsreaktion eingesetzt wird. Im Idealfall ist die exotherme Reaktionszone der endothermen Reaktionszone überlagert. Es ist aber auch möglich, die exotherme Reaktion der endothermen Reaktion vorzuschalten. In der endothermen Reaktionszone erfolgt die Umsetzung des zudosierten Wasser/Luft/Kohlenwasserstoff-Gemischs in ein H₂-reiches Gas, das neben CO₂ auch CO enthält. Um am Ende des Reaktors eine Rückreaktion des CO-Gases im Gasgemisch in elementaren Kohlenstoff (Ruß) zu verhindern, muß das Gasgemisch schnell auf ein niedriges Temperaturniveau herabgekühlt werden. Dies wird durch Wasserzugabe erreicht und wird als Quenchen bezeichnet. Für den Fall der partiellen Oxidation von Kohlenwasserstoffen ist dieser Vorgang zum Beispiel in der US 5,358,696 oder der US 2,664,402 beschrieben.

Durch den Quenchvorgang entsteht im Reaktor ein der Abkühlung entsprechendes Temperaturgefälle. Dies ist unverwünscht, da sich durch den damit einher gehenden Wärmeverlust im hinteren
Bereich der endothermen Zone eine zu niedrige Temperatur einstellt. Diese Temperatur ist bestimmend für die Gaszusammensetzung, da das thermodynamische Gleichgewicht der Reformierungsreaktion temperaturabhängig ist.

Aus der DE 197 11 044 A1 ist ein Reaktor zur Klärschlammverbrennung beschrieben. Er ist vertikal ausgerichtet, wobei die Verbrennungszone zur Verbrennung des Klärschlamms sich im unter Bereich befindet, und die innerhalb des Reaktors aufsteigenden Verbrennungsgase zur Trocknung des von oben in den Reaktor eintretenden Klärschlamms eingesetzt werden. Zwischen der Trocknungszone und der Verbrennungszone ist ein Festkörperstrahler angeordnet, der strahlenförmig angeordnete geneigte Schaufeln ähnlich einem Lüfterrad aufweist. Die Schaufeln sind um 30°C gegen die Strömungsrichtung der Verbrennungsgase geneigt. Beim Durchtritt durch den Festkörperstrahler geben die Verbrennungsgase einen Teil ihrer Wärme an den Festkörperstrahler ab. Ein Teil der aufgenommenen Energie wird als Festkörperstrahlung in die Verbrennungszone zurückgestrahlt.

Der Erfindung liegt die Aufgabe zugrunde, die Temperaturverteilung im autothermen Reaktor derart zu optimieren, daß die Reaktionszonen von der Quenchzone thermisch möglichst gut abgekoppelt werden. Eine Abkühlung im hinteren Bereich der endothermen Zone sollte vermieden, eine möglichst gute Energierückkopplung in die vorgeschaltete endotherme Zone jedoch erreicht werden. Dabei sollte der entstehende Druckverlust des Gasvolumenstroms im Reaktor möglichst gering sein.

Diese Aufgabe wird mit dem autothermen Reaktor nach Patentanspruch 1 gelöst. Vorteilhafte Ausführungen der Erfindung sind Gegenstand von Unteransprüchen.

Gemäß der Erfindung ist ein gasdurchlässiger Hitzeschild vorgesehen, der zwischen den Reaktionszonen des Reaktors und der Quenchzone im Reaktorgasvolumenstrom angeordnet ist. Der Hitzeschild umfaßt im wesentlichen zwei Komponenten:
- eine Thermalisolation zur thermischen Isolation von endothermer Reaktionszone und Quenchzone,
- einen Temperaturstrahler zur Abstrahlung der aus dem abströmenden Reaktorgasvolumenstrom aufgenommenen thermischen Energie. Seine Oberfläche ist der endothermen Reaktionszone zugewandt. Die Strahlungsleistung steigt gemäß dem Stefan-Boltzmann-Gesetz mit der 4. Potenz der Oberflächentemperatur. Je heißer die Gastemperatur, um so heißer die Oberfläche des Hitzeschilds und um so höher die in Richtung auf die endotherme Reaktionszone abgestrahlte Energie.

Für die Funktionsweise des erfindungsgemäßen temperaturstabilisierten Reaktors sind somit im wesentlichen folgende Wärmeübertragungsmechanismen von Bedeutung:
- Wärmeübertragung vom Gasvolumenstrom auf den Hitzeschild; hier ist vor allem die konvektive Wärmeübertragung durch erzwungene Konvektion von Bedeutung. Die Erzeugung einer turbulenten Strömung ist hierbei vorteilhaft. Diese kann durch entsprechende geometrische Auslegung des Hitzeschilds erreicht werden. Darüberhinaus kann die Hitzeschild-Geometrie derart ausgelegt werden, dass der Wärmefluß zu der Oberfläche des Temperaturstrahlers optimiert wird.
- Strahlungswärmeübertragung vom Hitzeschild zurück auf den in der Reaktionszone befindlichen Reformierungskatalysator. Typische Temperaturen bei der Durchführung der Reformierungsreaktion mit Benzin oder Diesel liegen im Bereich von ca. 900°C. Bei diesen Temperaturen ist die abgestrahlte Leistung bereits relativ hoch. Durch die Art der Oberfläche (idealerweise mit der Charakteristik eines schwarzen Strahlers) sowie der Oberflächengüte kann eine maximale Effizienz der Abstrahlung erreicht werden.
Mit dem erfindungsgemäßen Hitzeschild wird somit eine sehr gute thermisch Isolation der Quenchzone gegenüber dem autothermen Bereich des Reaktors erreicht. Die endotherme Reaktionszone kann auf Betriebstemperatur gehalten werden, ohne von dem Temperaturabfall in der Quenchzone beeinflusst zu werden.

Gleichzeitig wird eine Energierückkopplung erreicht, in dem die von dem Hitzeschild aufgenommene Wärme des Gasvolumenstroms in die endotherme Zone zurückgestrahlt wird. Somit können die Wärmeverluste, die durch den abströmenden Gasmassenstrom verursacht werden, wesentlich vermindert werden.

Dem erfindungsgemäßen Hitzeschild besitzt darüberhinaus eine vorteilhafte Wirkung als Energiespeicher bei Lastwechseln, wie im folgenden erläutert wird:

Bei einem Reaktor kann man im wesentlichen zwischen zwei Arten von Wärmeverlusten unterscheiden:
- Wandverluste: Wärmeverluste durch die Reaktorisolation hindurch und über die Reaktoroberfläche an die Umgebung;
- Gasvolumenstromverluste: Wärmeverluste, die durch den abströmenden Gasmassenstrom und die Gastemperatur verursacht werden. Die Gasvolumenstromverluste sind abhängig vom Gasmassenstrom, der Wärmekapazität des strömemden Gasgemischs und des Temperaturgefälles.

Bei Lastwechseln wird die exotherme Energieabgabe proportional der Laständerung verändert. Da die Wandverluste wesentlich von der Innentemperatur abhängen, die Gasvolumenstromverluste sich aber proportional zu der Last ändern, verschieben sich beim Lastwechsel die Anteile der Verlustarten entsprechend. Je geringer die Last, um so höher der Anteil der Wandverluste und je höher die Last, um so höher der Anteil der Volumenstromverluste.

Der erfindungsgemäße Hitzeschild kann unter den geschilderten Bedingungen als Wärmepuffer dienen, um die Betriebstemperatur des Reaktors zu stabilisieren. Im Lastwechsel nach unten gibt er, abhängig von seiner Wärmekapazität, seine zuvor aufgenommene Energie zeitverzögert ab und verzögert so die Abkühlung. Beim Lastwechsel nach oben wird der proportional steigende Volumenstromverlust durch die Wärmeaufnahme des Hitzeschilds gemindert.

Darüber hinaus wird durch diesen Dämpfungsvorgang eine konstantere Steuerung des Quenchens erreicht. Auch eine gleichmäßigere Versorgung der einem Reaktor nachgeschalteten Shiftreaktion zur CO-Entfernung wird dadurch ermöglicht.

Der erfindungsgemäße Reformierungskatalysator kann insbesondere für die Reformierung von Kohlenwasserstoffen, z.B. Benzin oder Diesel, eingesetzt werden.

Der erfindungsgemäße Reformierungsreaktor kann insbesondere in einem brennstoffzellenbetriebenen Kraftfahrzeug zur Speisung der Brennstoffzelle mit Wasserstoff dienen.

Die Erfindung wird anhand von Ausführungsbeispielen unter Bezugnahme auf Zeichnungen näher erläutert. Es zeigen:
- Fig. 1:: einen erfindungsgemäßen Reaktor in schematischer Darstellung;
- Fig. 2:: die Strahlungsleistung (Watt) eines erfindungsemäßen Hitzeschilds in Abhängigkeit von der Temperatur (°C);
- Fig. 3:: eine Ausführung des erfindungsgemäßen Hitzeschilds in schematischer Darstellung;
- Fig. 4:: eine konkrete Ausführung des erfindungsgemäßen Hitzeschilds;
- Fig. 5,6:: weitere konkrete Ausführungen des erfindungsgemäßen Hitzeschilds.

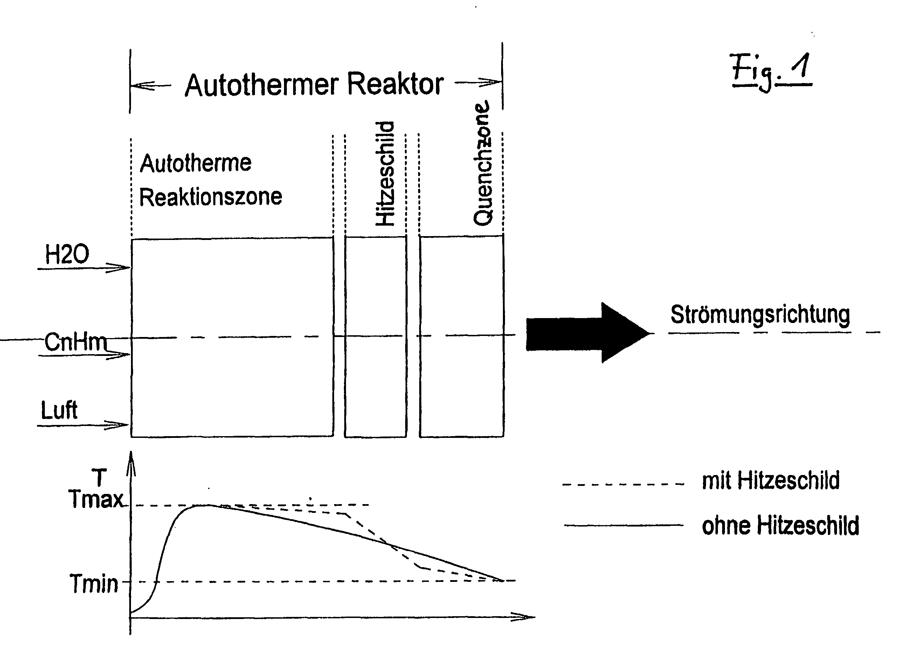

Fig. 1 zeigt einen erfindungsgemäßen autothermen Reformierungsreaktor in schematischer Darstellung. Er umfaßt die autotherme Reaktionszone, in der die exotherme Reaktion zur Energiefreisetzung sowie die endotherme Reformierungsreaktion ablaufen. Die zudosierten Kohlenwasserstoffe sowie Luft und H₂O werden darin in ein H₂-reiches, CO-haltiges Gasgemisch umgesetzt. Der autothermen Reaktionszone nachgeschaltet ist die Quenchzone, in der das Gasgemisch nach Durchströmen des gasdurchlässigen Hitzeschilds durch Zugabe einer Flüssigkeit, üblicherweise Wasser, schnell auf ein niedrigeres Temperaturniveau herabgekühlt wird. Das erfindungsgemäße Hitzeschild ist in dieser Ausführung quer zur Strömungsrichtung des Gasvolumenstroms positioniert. Es ist vorteilhaft so strukturiert, dass es eine möglichst hohe Oberfläche aufweist. Der erfindungsgemäße Hitzeschild erstreckt sich über den gesamten Querschnitt des Reaktors, so daß der Reaktor baulich in zwei Räume getrennt wird.

In Fig. 1 ist zusätzlich eine Temperaturverteilung innerhalb des Reaktors entlang der Strömumgsrichtung aufgezeichnet. Die gestrichelten Linien bezeichnen dabei die Werte in einem erfindungsgemäßen Reaktor, die durchgezogenen Linie die Werte in einem konventionellen Reaktor. Man erkennt, daß bei dem erfindungsgemäßen Reaktor im Bereich des Hitzeschilds ein starkes Temperaturgefälle herrscht, so daß die Quenchzone von den Reaktionszonen thermisch gut abgekoppelt ist. Demgegenüber weist der konventionelle Reaktor ein stetes Temperaturgefälle über die gesamte Länge des Reaktors auf. Dadurch ergeben sich Wärmeverluste im (in Strömungsrichtung gesehen)hinteren Bereich der Reaktionszone mit den in der Beschreibungseinleitung erläuterten Nachteilen.

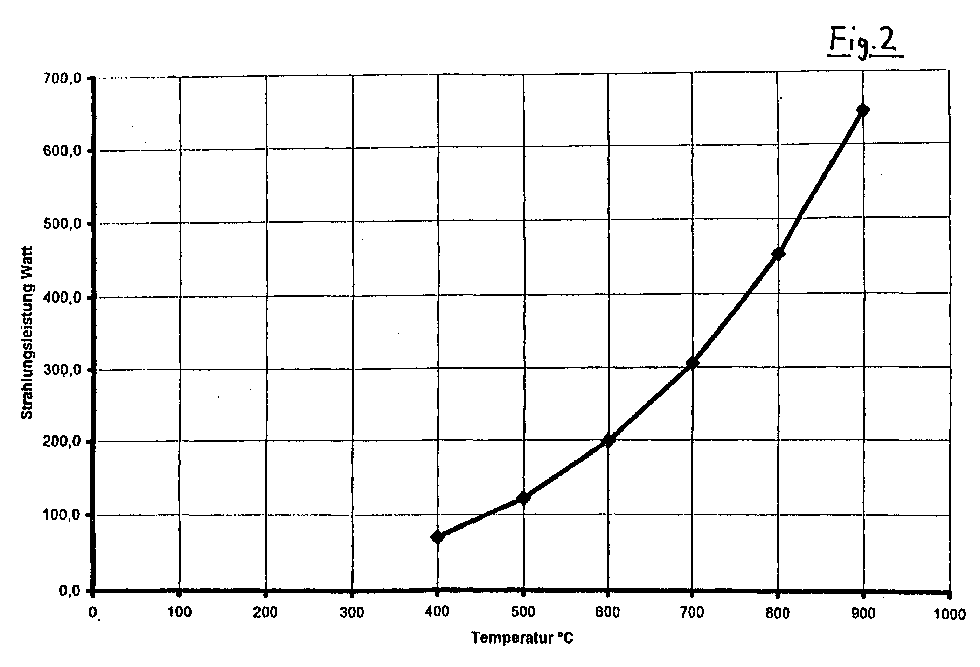

Fig. 2 zeigt die Strahlungsleistung eines erfindungsemäßen Hitzeschilds für einen bestimmten, beispielhaften Durchmesser. Wie man aus der Zeichnung erkennen kann, steigt die Strahlungsleistung gemäß Stefan-Boltzmann-Gesetz proportional zur 4. Potenz der Temperatur.

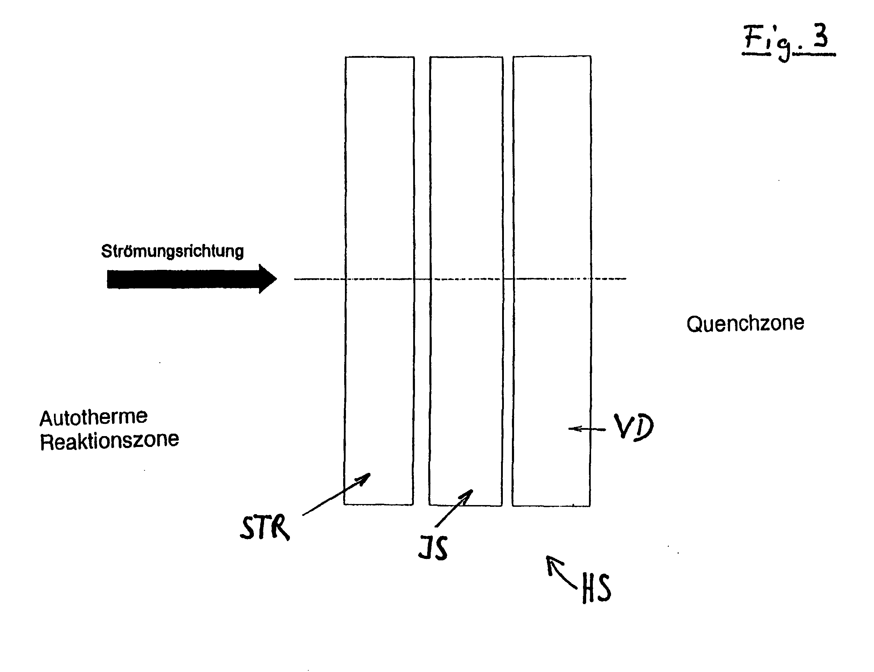

Fig. 3 zeigt eine Ausführung des erfindungsgemäßen Hitzeschilds in schematischer Darstellung. Der Hitzeschild HS ist in dem Reaktorgasvolumenstrom zwischen der autothermen Reaktionszone und der Quenchzone angeordnet. Der Hitzeschild HS umfaßt in dieser Ausführung folgende Elemente, die schichtartig nebeneinander angeordnet sind:
- Temperaturstrahler STR aus einem Schaum aus Metall oder Keramik. Er ist der autothermen Reaktionszone zugewandt und strahlt die über Konvektion vom Reaktorgasvolumenstrom auf den Hitzeschild übergegangene Wärme als Temperaturstrahlung in die Reaktionszone zurück.
- Thermalisolation IS aus einer thermisch isolierenden Keramikgussmasse oder einem vorgeformten Keramikteil. Sie kann einen schaumartigen Aufbau aufweisen.
- Verdampferstruktur VD aus einem Metallschaum mit möglichst hoher Oberfläche. Sie dient dazu, das Quenchen des Reaktorgasvolumenstroms zu unterstützen, in dem die zur Kühlung zugegebene, z.B. eingespritze oder eingedüste Wasser an ihrer Oberfläche möglichst schnell verdampft wird.

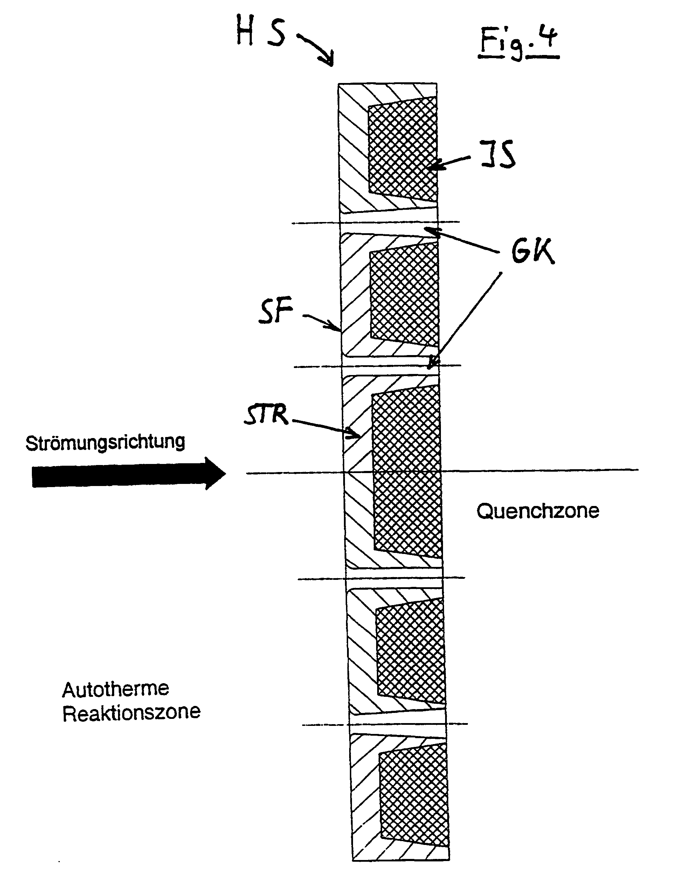

Fig. 4 zeigt eine konkrete Ausführung des erfindungsgemäßen Hitzeschilds HS. Er umfaßt den Temperaturstrahler STR, dessen gegen die Reaktionszone gerichtete Oberfläche als Strahlungsfläche SF dient, über die die vom Gasvolumenstrom auf den Hitzeschild HS übergegangene Wärme als Strahlungsenergie in die Reaktionszone zurückgestrahlt wird. Außerdem ist eine Thermalisolation IS vorhanden.

Die konstruktive Auslegung des Hitzeschilds HS ist so ausgelegt, dass eine möglichst hohe Strahlung in Gegenstromrichtung erzielt wird, und gleichzeitig eine möglichst gute thermische Isolation gegenüber der in Strömungsrichtung nachgeschalteten Quenchzone. Für eine gute Wärmeübertragung aus dem Gasvolumenstrom auf den Hitzeschild HS ist die Erzeugung einer turbulenten Strömung vorteilhaft, z.B. durch eine geeignete Wahl des Strömungsquerschnitts. In der dargestellten Ausführung sind die Strömungskanäle GK für den Reaktorgasvolumenstrom entweder konisch oder zylinderförmig ausgebildet. Die Wände der Strömungskanäle GK werden durch den Temperaturstrahler STR gebildet. Dadurch wird der Wärmefluß zur strahlungsaktiven Oberfläche SF des Temperaturstrahlers STR hin optimiert. Die Thermalisolation IS besteht in dieser Ausführung somit aus einer Mehrzahl einzelner, nicht zusammenhängender Bereiche.

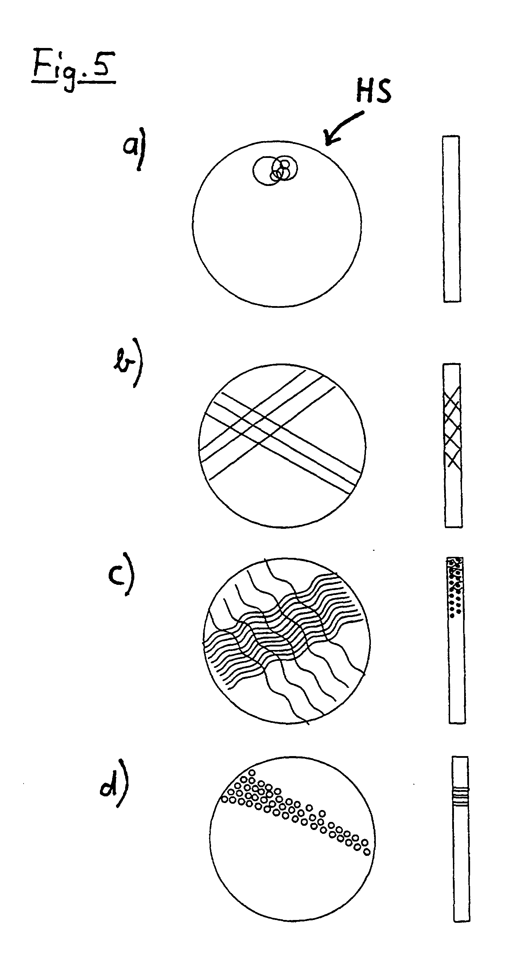

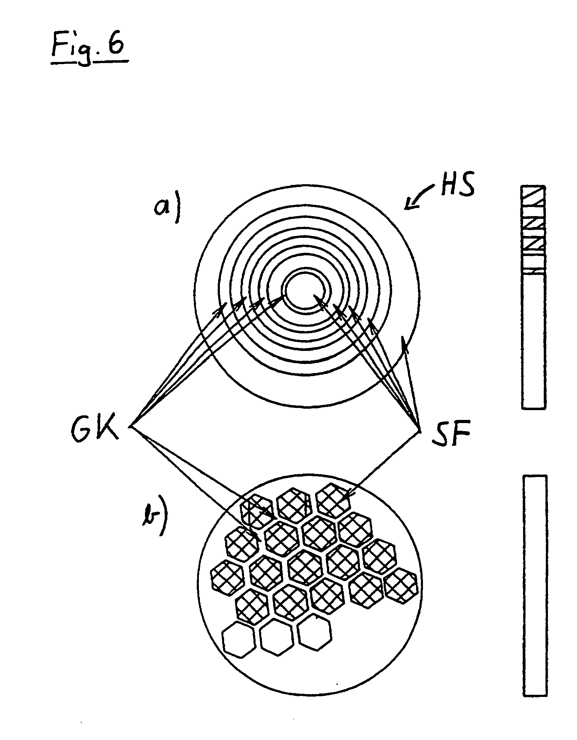

Fig. 5 und 6 zeigen weitere Ausführungsformen des erfindungsgemäßen Hitzeschilds HS. Dargestellt ist jeweils der Temperaturstrahler als äußerster Schicht des Hitzeschilds. Jede Ausführung ist sowohl in Draufsicht als auch im Querschnitt dargestellt. Die obere Abbildung, Fig. 5a, zeigt eine erste Ausführung des Temperaturstrahlers als Keramik- oder Metallschaum. Fig. 5b zeigt eine weitere Ausführung, bei der der Temperaturstrahler als Kreuzkanalstruktur z.B. gemäß der DE 43 34 981 A1, ausgebildet ist. Fig. 5c und Fig. 5d schließlich zeigen Ausführungen aus Drahtgitterstrukturen bzw. Lochblechen.

In Fig. 6 sind Ausführungen des erfindungegemäßen Hitzeschilds HS dargestellt, der verschiedene Spaltstrukturen als Strömungskanäle GK für den Gasvolumenstrom aufweist. Fig. 6a zeigt eine Spaltstruktur aus mehreren konzentrischen Ringspalten. Fig. 6b zeigt eine Spaltstruktur nach Art einer Bienenwabe. Dabei bilden die "Stege" zwischen den "Waben" die Spalte, während die "Waben" die Oberfläche SF des Temperaturstrahlers darstellen.

Besonders geeignete Materialien für den Hitzeschild HS sind solche, die die folgenden Anforderungen erfüllen:
- Minimaler Druckverlust,
- Maximale Oberfläche, insbesondere senkrecht zur Strömungsrichtung,
- Temperaturbeständigkeit,
- Temperaturwechselbeständigkeit,
- Verzunderungsfestigkeit.

Letztgenannte Eigenschaft ist aus dem Grunde relevant, da es bei inhomogener Gemischbildung in der Reaktionszone zum Durchbruch von O₂ kommen kann.

## Patentansprüche

1. Autothermer Reformierungsreaktor, umfassend
- eine endotherme Reaktionszone, in der ein Katalysator zur endothermen Reformierung eines Rohkraftstoffes vorgesehen ist;
- eine exotherme Reaktionszone, in der für die endotherme Reformierungsreaktion benötigte Energie durch eine exotherme Reaktion freigesetzt wird;
- eine den beiden Reaktionszonen in Bezug auf die Strömungsrichtung nachgeschaltete Quenchzone, in der der Reaktorgasvolumenstrom durch Zugabe einer Flüssigkeit gekühlt wird;
**dadurch gekennzeichnet,**
**daß** endotherme Reaktionszone und Quenchzone durch einen gasdurchlässigen Hitzeschild (HS) getrennt sind, wobei der Hitzeschild (HS)
- eine Thermalisolation (IS)zur thermischen Isolation von endothermer Reaktionszone und Quenchzone, sowie
- einen der endothermen Reaktionszone zugewandten Temperaturstrahler (STR) zur Abstrahlung der aus dem Reaktorgasvolumenstrom aufgenommenen thermischen Energie als Temperaturstrahlung in die endotherme Reaktionszone zurück,
umfaßt.

2. Autothermer Reformierungsreaktor nach Anspruch 1,
**dadurch gekennzeichnet,**
**daß** der Hitzeschild (HS) auf seiner der Quenchzone zugewandten Seite eine Verdampferstruktur (VD), z.B. aus einem Metallschaum umfaßt.

3. Autothermer Reformierungsreaktor nach Anspruch 1 oder 2,
**dadurch gekennzeichnet,**
**daß** die exotherme Reaktionszone der endothermen Reaktionszone vorgeschaltet ist.

4. Autothermer Reformierungsreaktor nach einem der Ansprüche 1 oder 2, **dadurch gekennzeichnet, daß** die exotherme Reaktionszone der endothermen Reaktionszone überlagert ist.

5. Autothermer Reformierungsreaktor nach einem der vorangehenden Ansprüche, **dadurch gekennzeichnet, daß** der Hitzeschild (HS) Strömungskanäle (GK) aufweist, deren Wände durch den Temperaturstrahler (STR) gebildet sind.

6. Autothermer Reformierungsreaktor nach einem der Ansprüche 1 bis 4, **dadurch gekennzeichnet, daß** der Temperaturstrahler (STR) und/oder die Thermalisolation (IS) als Kreuzkanalstruktur, Drahtgitterstruktur oder Lochblech ausgebildet sind.

7. Autothermer Reformierungsreaktor nach einem der Ansprüche 1 bis 4, **dadurch gekennzeichnet**,
daß der Temperaturstrahler (STR) als schaumartige Struktur aus Metall oder Keramik oder aus einem Metall/Keramik-Verbund ausgebildet ist.

8. Autothermer Reformierungsreaktor nach einem der Ansprüche 1 bis 4, **dadurch gekennzeichnet, daß** die Thermalisolation (IS) als schaumartige Struktur aus Keramik ausgebildet ist.

9. Autothermer Reformierungsreaktor nach einem der Ansprüche 1 bis 4, **dadurch gekennzeich-net,**
**daß** der Temperaturstrahler (STR) und/oder die Thermalisolation (IS) Spaltstrukturen in Form von konzentrischen Ringspalten oder in Form von Wabenstrukturen aufweisen.

## Claims

1. Autothermic reforming reactor, comprising
- an endothermic reaction zone, in which a catalyst for the endothermic reforming of a crude fuel is provided;
- an exothermic reaction zone, in which energy required for the endothermic reforming reaction is released by means of an exothermic reaction;
- a quench zone which is located downstream of the two reaction zones with respect to the direction of flow and in which the reactor gas volume flow is cooled by the additional liquid;
**characterized**
**in that** the endothermic reaction zone and the quench zone are separated by means of a gas-permeable heat shield (HS), the heat shield (HS) comprising
- a thermal insulation (IS) for the thermal insulation of the endothermic reaction zone and quench zone, and also
- a thermal radiator (STR), facing the endothermic reaction zone, for radiating the thermal energy absorbed from the reactor gas volume flow back into the endothermic reaction zone as thermal radiation.

2. Autothermic reforming reactor according to Claim 1, **characterized in that** the heat shield (HS) comprises, on its side facing the quench zone, an evaporator structure (VD) consisting, for example, of a metal foam.

3. Autothermic reforming reactor according to Claim 1 or 2, **characterized in that** the exothermic reaction zone is located upstream of the endothermic reaction zone.

4. Autothermic reforming reactor according to either one of Claims 1 and 2, **characterized in that** the exothermic reaction zone is superposed on the endothermic reaction zone.

5. Autothermic reforming reactor according to one of the preceding claims, **characterized in that** the heat shield (HS) has flow ducts (GK), the walls of which are formed by the thermal radiator (STR).

6. Autothermic reforming reactor according to one of Claims 1 to 4, **characterized in that** the thermal radiator (STR) and/or the thermal insulation (IS) are/is designed as a crossed-duct structure, a wire-grid structure or a perforated plate.

7. Autothermic reforming reactor according to one of Claims 1 to 4, **characterized in that** the thermal radiator (STR) is designed as a foam-like structure consisting of metal or ceramic or of a composite metal/ceramic material.

8. Autothermic reforming reactor according to one of Claims 1 to 4, **characterized in that** the thermal insulation (IS) is designed as a foam-like structure consisting of ceramic.

9. Autothermic reforming reactor according to one of Claims 1 to 4, **characterized in that** the thermal radiator (STR) and/or the thermal insulation (IS) have/has gap structures in the form of concentric annular gaps or in the form of honeycomb structures.

## Revendications

1. Réacteur de reformage autothermique, comprenant
- une zone de réaction endothermique, dans laquelle il est prévu un catalyseur pour le reformage endothermique d'un combustible brut;
- une zone de réaction exothermique, dans laquelle l'énergie nécessaire pour la réaction endothermique de reformage est libérée par une réaction exothermique;
- une zone de refroidissement placée à la suite des deux zones de réaction par rapport au sens d'écoulement, dans laquelle le courant volumique de gaz de réacteur est refroidi par addition d'un liquide;
**caractérisé en ce que** la zone de réaction endothermique et la zone de refroidissement sont séparées par un bouclier thermique (HS) perméable au gaz, le bouclier thermique (HS) comprenant
- un isolant thermique (IS) pour l'isolation thermique de la zone de réaction endothermique et de la zone de refroidissement, ainsi que
- un élément radiant thermique (STR) tourné vers la zone de réaction endothermique pour renvoyer l'énergie thermique soutirée au courant volumique de gaz de réacteur par rayonnement sous forme d'un rayonnement thermique dans la zone de réaction endothermique.

2. Réacteur de reformage autothermique selon la revendication 1, **caractérisé en ce que** le bouclier thermique (HS) comprend, sur sa face tournée vers la zone de refroidissement, une structure d'évaporateur (VD), par exemple en une mousse métallique.

3. Réacteur de reformage autothermique selon la revendication 1 ou 2, **caractérisé en ce que** la zone de réaction exothermique précède la zone de réaction endothermique.

4. Réacteur de reformage autothermique selon la revendication 1 ou 2, **caractérisé en ce que** la zone de réaction exothermique est superposée à la zone de réaction endothermique.

5. Réacteur de reformage autothermique selon l'une quelconque des revendications précédentes, **caractérisé en ce que** le bouclier thermique (HS) présente des canaux d'écoulement (GK), dont les parois sont formées par l'élément radiant thermique (STR).

6. Réacteur de reformage autothermique selon l'une quelconque des revendications 1 à 4, **caractérisé en ce que** l'élément radiant thermique (STR) et/ou l'isolant thermique (IS) ont la forme d'une structure de canaux croisés, d'une structure de grille en fil ou d'une tôle perforée.

7. Réacteur de reformage autothermique selon l'une quelconque des revendications 1 à 4, **caractérisé en ce que** l'élément radiant thermique (STR) a la forme d'une structure expansée en métal ou en céramique ou en un composite métal/céramique.

8. Réacteur de reformage autothermique selon l'une quelconque des revendications 1 à 4, **caractérisé en ce que** l'isolant thermique (IS) a la forme d'une structure expansée en céramique.

9. Réacteur de reformage autothermique selon l'une quelconque des revendications 1 à 4, **caractérisé en ce que** l'élément radiant thermique (STR) et/ou l'isolant thermique (IS) présentent des structures fendues en forme de fentes annulaires concentriques ou en forme de structures en nids d'abeilles.
